# FASCICULE DE BREVET EUROPEEN

(11) **EP 1 750 963 B1**
(45) Date de publication et mention de la délivrance du brevet: **11.07.2007**
(21) Numéro de dépôt: 05766692.7
(22) Date de dépôt: 25.05.2005
(51) Int. Cl.: B60K 6/04

(54) **ELEMENT DE TRANSMISSION POUR UNE CHAINE DE TRACTION DE TYPE HYBRIDE PARALLELE**
ÜBERTRAGUNGSELEMENT FÜR EINEN PARALLELEN HYBRIDANTRIEBSSTRANG
TRANSMISSION ELEMENT FOR A PARALLEL HYBRID TRACTION CHAIN

(30) Priorité: 03.06.2004 FR 0406029
(43) Date de publication de la demande: 14.02.2007
(73) Titulaire: Peugeot Citroen Automobiles, 78140 Velizy-Villacoublay (FR)
(72) Inventeur: CHAPELON, Lionel, F-60650 LE MONT SAINT ADRIEN (FR); DUBARRY, Christophe, F-91620 NOZAY (FR)
(86) Numéro de dépôt international: PCT/FR2005/050367
(87) Numéro de publication internationale: WO 2005/123431

(56) Documents cités:
- EP-A- 0 688 693
- FR-A- 2 689 821
- FR-A- 2 782 959
- FR-A- 2 814 121

## Description

La présente invention concerne un élément de transmission pour une chaîne de traction de type hybride parallèle, notamment pour véhicules automobiles.

On entend par chaîne de traction hybride parallèle, une chaîne de traction fournissant à un arbre de roues une énergie mécanique à partir d'au moins un moteur de type « irréversible » (en général un moteur thermique) et d'au moins un moteur de type « réversible » (en général un moteur électrique). Dans ce type de chaîne, le noeud d'énergie qui provient des deux moteurs est de nature mécanique.

On connaît de telles chaînes de traction (FR 2 814 121) qui comprennent un moteur thermique, un élément de transmission, et une boîte de vitesses, dont l'entrée est reliée à un élément de transmission et la sortie à un arbre de roues.

L'élément de transmission comporte en outre un moteur électrique ainsi qu'un premier embrayage de liaison entre le moteur thermique et le moteur électrique, et un deuxième embrayage de liaison entre le moteur électrique et la boîte de vitesses. Les premier et deuxième embrayages sont de type humide.

De telles chaînes de traction hybride selon le préambule de la revendication 1 ne donnent pas entière satisfaction.

En effet, l'élément de transmission qui intègre le moteur électrique et les deux embrayages de liaison respectivement au moteur thermique et à la boîte de vitesses n'est pas prévu pour être facilement interchangeable avec un embrayage simple du type utilisé dans les chaînes de traction classique à moteur thermique. En particulier, un espace conséquent doit être prévu dans le compartiment moteur pour le circuit hydraulique de commande des embrayages humides et le circuit hydraulique de refroidissement/lubrification de ces embrayages.

Plus précisément, l'intégration d'un tel élément de transmission dans une chaîne de traction classique nécessite le décalage du moteur thermique
ou/et de la boîte de vitesses, ce qui entraîne la modification de nombreuses pièces du compartiment moteur.

Compte tenu du faible nombre de véhicules à propulsion hybride produit de nos jours, le coût de ces chaînes de traction est par conséquent extrêmement élevé par rapport au coût d'une chaîne de traction d'un groupe moto-propulseur à propulsion classique.

FR 2 782 959 A décrit un élément de transmission pour une chaîne de traction de type hybride parallèle pour véhicules automobiles, ledit élément comprenant un organe d'entrée rotatif destiné à être relié à un moteur thermique, un organe de sortie de mouvement destiné à être relié à un arbre d'entrée de boîte de vitesses, une machine électrique comprenant un stator et un rotor, un premier embrayage de liaison entre l'organe d'entrée et un organe intermédiaire rotatif autour d'un premier axe, l'organe intermédiaire étant relié en rotation au rotor, un second embrayage de liaison entre l'organe intermédiaire et l'organe de sortie, élément dans lequel l'axe de rotation du rotor est distinct du premier axe et des moyens de transmission relient en rotation le rotor et l'organe intermédiaire.

L'invention a donc pour but de proposer un élément de transmission de faible encombrement qui puisse se substituer à un embrayage simple d'une chaîne de traction mono-source classique pour former une chaîne de traction de type hybride parallèle, sans modification majeure des autres éléments de la chaîne de traction.

L'invention a donc pour objet un élément de transmission pour une chaîne de traction de type hybride parallèle, notamment pour véhicules automobiles, ledit élément comprenant un organe d'entrée rotatif destiné à être relié à un moteur thermique, un organe de sortie de mouvement destiné à être relié à un arbre d'entrée de boîte de vitesses, une machine électrique comprenant un stator et un rotor, un premier embrayage de liaison entre l'organe d'entrée et un organe intermédiaire rotatif autour d'un premier axe, l'organe intermédiaire étant relié en rotation au rotor, un second embrayage de liaison entre l'organe intermédiaire et l'organe de sortie, lesdits embrayages étant de type humide, caractérisé en ce qu'il comprend un carter comportant une première demi-coquille supportant à rotation l'organe d'entrée et une seconde demi-coquille supportant à rotation l'arbre de boîte, les première et seconde demi-coquilles définissant un logement dans lequel sont montés coaxialement et concentriquement les premier et second embrayages de liaison, en ce que l'axe de rotation du rotor est distinct du premier axe, en ce que des moyens de transmission relient en rotation le rotor et l'organe intermédiaire et en ce qu'il comprend en outre des moyens de commande hydraulique sélective et de lubrification/refroidissement desdits premier et second embrayages.

Suivant d'autres caractéristiques de l'invention, prises seules ou selon toutes les combinaisons techniquement possibles :
- les moyens de commande hydraulique sélective et de lubrification/refroidissement comprennent un premier circuit hydraulique de commande sélective, et un second circuit hydraulique de lubrification/refroidissement, lesdits premier et second circuits hydrauliques étant reliés hydrauliquement à une source commune de fluide sous pression ;
- lesdits premier et second circuits hydrauliques sont ménagés, au moins en partie dans l'organe intermédiaire et au moins en partie dans un distributeur hydraulique fixé sur le carter et supportant à rotation l'organe intermédiaire ;
- ledit premier circuit comprend pour chaque embrayage, un logement ménagé dans l'organe intermédiaire et obturé par un organe d'actionnement de l'embrayage déplaçable sous l'effet de la pression dans ledit logement, ledit logement étant relié hydrauliquement à la source de pression par un circuit d'alimentation, une électrovanne étant disposée sur ledit circuit d'alimentation ;
- les premier et second embrayages comprennent chacun un organe de rappel en position ouverte de ces embrayages, l'organe de rappel s'appuyant sur une face de l'organe d'actionnement de l'embrayage ;
- ledit circuit d'alimentation comprend une première portion ménagée dans le distributeur hydraulique et une seconde portion ménagée dans ledit organe intermédiaire et débouchant dans la chambre de pression, lesdites première et seconde portions étant en communication hydraulique à travers l'espace annulaire entre le distributeur et l'organe intermédiaire ;
- le second circuit comprend une première conduite entre la source de pression et un premier espace délimité par l'organe d'entrée, l'arbre de boîte, l'organe intermédiaire et l'organe de sortie, ce premier espace étant obturé partiellement par le premier embrayage, une électrovanne étant disposée dans le second circuit en amont de la première conduite ;
- ladite première conduite comprend une première portion ménagée dans le distributeur hydraulique, et une seconde portion ménagée dans l'arbre de boîte, la seconde portion débouchant dans le premier espace, les première et seconde portions étant en communication hydraulique à travers l'espace annulaire entre l'arbre de boîte et le distributeur hydraulique ;
- le second circuit comprend une seconde conduite entre la source de pression et un second espace délimité par l'organe intermédiaire et l'organe de sortie, ce second espace étant obturé partiellement par le second embrayage, une électrovanne étant disposée dans le second circuit en amont de la seconde conduite ;
- la seconde conduite comprend une première portion ménagée dans le distributeur hydraulique, et une seconde portion ménagée dans l'organe intermédiaire, la seconde portion débouchant dans le second espace, les première et seconde portions étant en communication hydraulique à travers l'espace annulaire entre l'organe intermédiaire et le distributeur hydraulique ;
- les premier et second espaces communiquent hydrauliquement par le second embrayage ;
- le premier espace et ledit logement communiquent hydrauliquement par le premier embrayage ;
- ladite source de fluide sous pression comprend un générateur de pression, un accumulateur de pression, une conduite d'émission de fluide, reliée d'une part audit générateur de pression, et d'autre part audit accumulateur de pression, et une électrovanne disposée entre l'accumulateur de pression et la conduite d'émission, ladite électrovanne étant adaptée pour sélectivement ouvrir ou fermer la liaison entre l'accumulateur et la conduite d'émission ;
- le générateur comprend une pompe, un réservoir de fluide de commande, un clapet anti-retour, ladite pompe étant reliée en amont au réservoir et en aval à la conduite d'émission via le clapet anti-retour ;
- la source de pression comprend un capteur de pression mesurant la pression de fluide régnant dans la conduite d'émission, ledit capteur de pression étant relié à une unité de commande de l'électrovanne entre l'accumulateur de pression et la conduite d'émission qui pilote ladite électrovanne en fonction de la pression mesurée par ledit capteur de pression ; et
- la conduite d'émission comporte une soupape de sécurité adaptée pour mettre en communication ladite conduite d'émission avec un circuit de décharge si la pression dans la conduite d'émission est supérieure à une valeur de seuil prédéterminée.

L'invention a également pour objet un véhicule automobile comprenant une chaîne de traction de type hybride parallèle, ladite chaîne de traction comprenant un moteur thermique, une boîte de vitesses et un élément de transmission tel que précédemment mentionné.

L'invention sera mieux comprise à la lecture de la description qui va suivre, donnée à titre d'exemple et faite en référence aux dessins annexés dans lesquels :
- la Figure 1 est une vue schématique en coupe axiale d'un élément de transmission selon l'invention ;
- la Figure 2 est une vue d'un détail de la Figure 1 ; et
- la Figure 3 est une vue schématique des circuits hydrauliques de commande et de lubrification/refroidissement de l'élément de transmission selon l'invention.

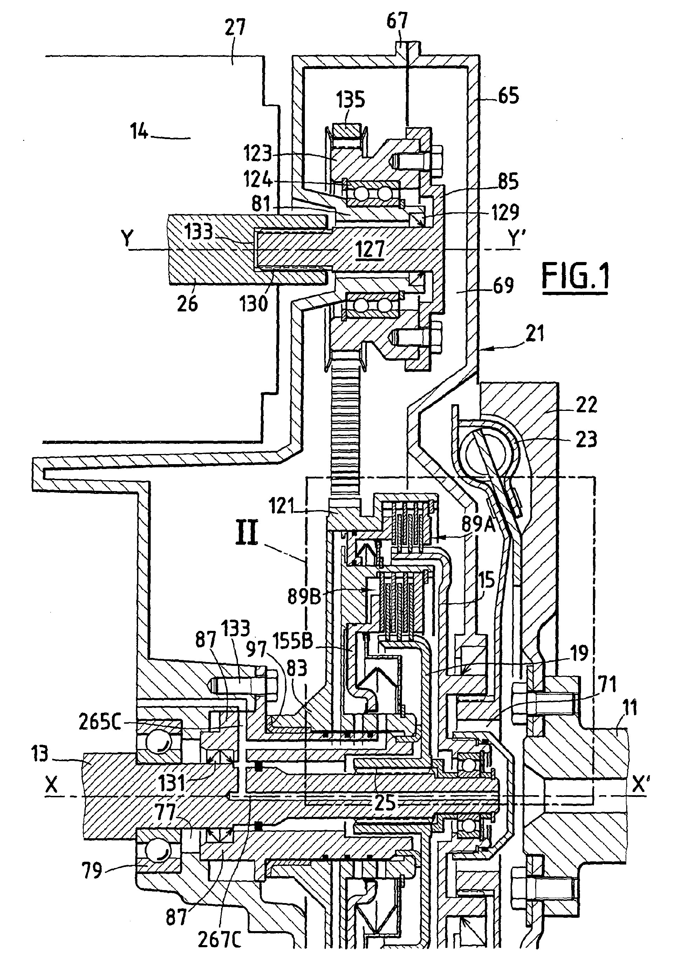

Sur la Figure 1, on a représenté un élément de transmission selon l'invention, destiné à relier un vilebrequin 11 de moteur thermique à un arbre d'entrée 13 de boîte de vitesses.

Cet élément de transmission comprend une machine électrique 14, un organe d'entrée 15 rotatif autour d'un premier axe X-X', un organe de sortie 19 de mouvement, rotatif autour du premier axe X-X', et un carter 21 d'embrayage.

L'axe X-X' est orienté de l'entrée vers la sortie pour la commodité de la description qui va suivre.

Les termes « amont », « aval », « axial » et « radial » s'entendront en référence à cette orientation.

Le vilebrequin 11 du moteur thermique est muni d'un volant d'inertie 22, et est relié à l'organe d'entrée 15 par un dispositif amortisseur 23.

L'arbre d'entrée 13 de la boîte de vitesses (désigné par « arbre primaire » ou dans ce texte par « arbre de boîte ») est monté rotatif autour de l'axe X-X'. Il comprend sur sa face radiale extérieure une portion cannelée 25 qui coopère avec l'organe de sortie 19.

La machine électrique 14 comprend un rotor 26 et un stator 27. Le rotor 26 est disposé suivant un axe Y-Y' parallèle au premier axe X-X', à l'écart de ce premier axe X-X' et à l'extérieur du carter d'embrayage 21.

Cette machine électrique 14 est de forme allongée suivant l'axe Y-Y' de sorte que la longueur de la machine électrique 14, prise suivant la direction Y-Y' est supérieure à son diamètre, pris suivant une direction perpendiculaire à l'axe Y-Y'.

Cette disposition est particulièrement adaptée pour optimiser l'encombrement des groupes motopropulseurs à disposition transversale par rapport à une direction longitudinale du véhicule.

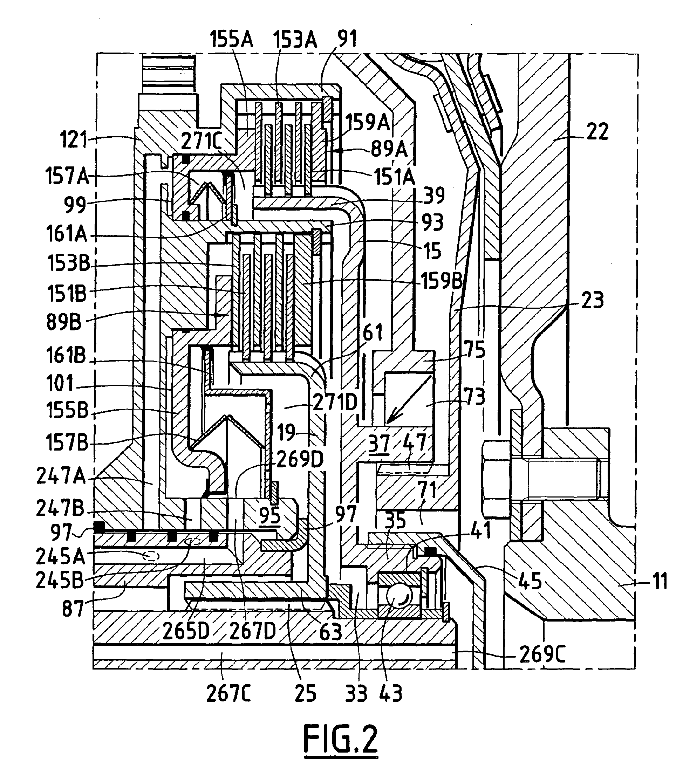

Comme illustré sur la Figure 2, l'organe d'entrée 15 est en forme de disque qui s'étend perpendiculairement à l'axe X-X'. II est traversé par un alésage 33 central d'axe X-X'. Il comprend des première et seconde couronnes amont 35 et 37 sur la face amont et une couronne aval 39 sur la face aval, qui s'étendent suivant des directions parallèles à l'axe X-X'.

L'extrémité amont de l'arbre de boîte 13 est positionnée dans l'alésage central 33. La première couronne amont 35 délimite circonférentiellement cet alésage 33. La face radiale interne de cette première couronne amont est munie d'un logement circonférentiel 41.

L'organe d'entrée 15 est monté libre en rotation autour de l'axe X-X' sur l'arbre de boîte 13 au moyen d'un palier de roulement 43 dont la bague externe est en appui dans le logement circonférentiel 41 et la bague interne est en appui sur l'arbre de boite 13.

Un capot d'étanchéité 45 est fixé en appui sur la face radiale externe de la première couronne circonférentielle 35 pour obturer l'alésage 33 en amont.

La seconde couronne amont 37 comprend une face radiale interne 47 cannelée qui coopère avec des cannelures sur une surface externe en regard du dispositif amortisseur 23 fixé au volant d'inertie 22 équipant le vilebrequin 11.

L'organe de sortie 19 est en forme de disque qui s'étend perpendiculairement à l'axe X-X'. II comprend sur sa face aval une couronne aval externe 61 et une couronne aval interne 63 qui s'étendent suivant des directions parallèles à l'axe X-X'.

Cette couronne aval interne 63 est munie sur sa face radiale interne de cannelures qui coopèrent avec la portion cannelée 25 de l'arbre de boîte 13, comme décrit ci-dessus.

En se référant à la Figure 1, le carter d'embrayage 21 est constitué essentiellement d'une première demi-coquille 65 et d'une deuxième demi-coquille 67, assemblées par des moyens de fixation (non représentés) répartis sur la périphérie du carter 21. Les deux demi-coquilles 65 et 67 de carter délimitent intérieurement un logement 69.

La première demi-coquille 65 est traversée par un alésage central 71 d'axe X-X'. En se référant à la Figure 2, les première et seconde couronnes amont 35 et 37 de l'organe d'entrée 15 ainsi que l'extrémité amont de l'arbre de boîte 13 sont disposés en saillie dans cet alésage 71.

Par ailleurs, un joint d'étanchéité 73 est monté en appui, d'une part, sur la face externe de la seconde couronne amont 37 de l'organe d'entrée 15 et d'autre part, dans un logement circonférentiel 75 de la première demi-coquille 65.

En référence à la Figure 1, la seconde demi-coquille 67 est traversée par un alésage 77 d'axe X-X' dans lequel l'arbre de boîte 13 est monté rotatif autour de l'axe X-X' par l'intermédiaire d'un palier de roulement 79.

La seconde demi-coquille est par ailleurs munie d'un fourreau 81 traversé par un alésage d'axe Y-Y'.

Le logement 69 défini par les deux demi-coquilles 65 et 67 contient un organe intermédiaire 83, un organe de couplage 85 au rotor 26 de la machine électrique 14, un distributeur hydraulique 87, un premier embrayage 89A entre l'organe d'entrée 15 et l'organe intermédiaire 83 et un second embrayage 89B entre l'organe intermédiaire 83 et l'organe de sortie 19.

L'organe intermédiaire 83 est formé essentiellement par un moyeu. Comme illustré sur la Figure 2, la face amont de cet organe 83 comprend successivement suivant une direction radiale depuis l'extérieur vers l'axe X-X', une couronne amont externe 91, une couronne amont interne 93 et une couronne d'appui 95 qui s'étendent parallèlement à la direction axiale vers l'amont.

La couronne d'appui 95 repose sur le distributeur hydraulique 87, au moyen de deux paliers lisses 97. Ainsi, l'organe intermédiaire 83 est monté rotatif autour de l'axe X-X' par rapport au distributeur hydraulique 87.

Cet organe 83 comprend en outre un premier logement de piston 99 qui s'étend radialement entre la couronne externe 91 et la couronne interne 93 et un second logement de piston 101 qui s'étend radialement entre la couronne interne 93 et la couronne d'appui 95.

L'organe intermédiaire 83 comprend en outre sur sa face radiale externe une roue tangente dentée 121 de liaison avec l'organe de couplage 85.

L'organe de couplage 85 (Figure 1) comprend une roue dentée 123 montée rotative autour de l'axe Y-Y' au moyen de paliers de roulement 124 en appui sur les faces radiales externes du fourreau 81.

L'organe de couplage 85 comprend en outre un arbre de sortie 127 monté solidaire de la roue dentée 123. Un joint d'étanchéité 129 est disposé entre cet arbre de sortie 127 et le fourreau 81. L'arbre de sortie 127 comprend en outre une portion amont 130 à l'extérieur du fourreau 81.

La surface radiale externe de la portion amont 130 de l'arbre de sortie 127 comprend une zone cannelée.

Cette zone cannelée coopère avec un logement cannelé 133 axial dans le rotor 26 de sorte que le rotor 26 et l'organe de couplage 85 sont solidaires en rotation.

Par ailleurs, les dents de la roue tangente dentée 123 de l'organe de couplage 85 et de la roue dentée 121 de l'organe intermédiaire 83 sont dans le même plan de rotation, perpendiculaire aux axes X-X' et Y-Y'.

Une chaîne 135 de type « morse » dont une première portion coopère avec la roue dentée 123 de l'organe de couplage 85 et une seconde portion coopère avec la roue tangente dentée 121 de l'organe intermédiaire 83 relie en rotation ces organes.

Le distributeur hydraulique 87 est constitué d'un manchon qui s'étend axialement suivant l'axe X-X'. La base aval de ce manchon est calée entre la seconde demi-coquille 67 du carter 21 et l'arbre de boîte 13. Un double joint d'étanchéité 131 est disposé entre ce manchon et l'arbre de boîte 13.

Ce manchon est par ailleurs fixé sur la seconde demi-coque 67 au moyen de vis 133.

Comme illustré sur la Figure 2, le premier embrayage 89A est constitué d'une première série de disques 151A liés en rotation à la couronne aval 39 de l'organe d'entrée 15 par des cannelures axiales et d'une deuxième série de disques 153A liés en rotation à la couronne amont externe 91 de l'organe intermédiaire 83 par des cannelures axiales. Il comprend en outre un premier piston 155A et un élément élastique 157A.

Les premiers et deuxièmes disques 151A et 153A sont imbriqués de façon alternée et sont déplaçables axialement respectivement sur la couronne aval 39 de l'organe d'entrée 15 et sur la couronne externe 91 de l'organe intermédiaire 83.

Une butée amont 159A, solidaire de la couronne externe 91 de l'organe intermédiaire 83 limite le déplacement axial des premiers et seconds disques 151A et 153A vers l'amont.

Le premier piston 155A possède une première surface d'appui sur la seconde série de disques 153A et une seconde surface d'appui, en regard du fond du premier logement 99. Le premier piston 155A obture le premier logement 99 de manière étanche.

L'élément élastique 157A prend appui d'une part, sur une surface du piston à l'opposé de la seconde surface et d'autre part, sur un support 161A solidaire de la couronne interne 93 de l'organe intermédiaire 83.

Au repos, l'élément élastique 157A, constitué par exemple par un ressort hélicoïdal, ou un diaphragme ou une rondelle élastique, maintient la seconde surface d'appui du premier piston 155A au contact du fond du logement 99. Le premier embrayage 89A est donc naturellement en position ouverte, c'est à dire en position débrayée

Cet embrayage 89A est de type « humide ». Le premier piston 155A est déplaçable par coulissement axial vers l'amont lorsque le fluide de commande qui débouche dans le premier logement 99 exerce une pression hydraulique sur le piston 155A.

Ce déplacement permet de serrer de manière solidaire les premiers et seconds disques 151A et 153A entre la première surface du premier piston 155A et la butée 159A pour que le premier embrayage 89A soit en position fermée, c'est à dire en position embrayée.

Le second embrayage 89B est de constitution et de fonctionnement identique au premier embrayage 89A.

II comprend des première et seconde séries de disques 151 B et 153B solidaires en rotation respectivement de la couronne aval 61 de l'organe de sortie 19 et de la couronne interne 93 de l'organe intermédiaire 83, par des cannelures.

Il comprend aussi une butée 159B, un second piston 155B possédant une première surface de contact avec les seconds disques 153B et une seconde surface de contact en regard du fond du second logement 101, et un élément élastique 157B.

Le second piston 155B obture le second logement 101 de manière étanche.

L'élément élastique 157B prend appui d'une part, sur une surface du second piston 155B à l'opposé de sa seconde surface et d'autre part, sur un support 161 B solidaire de la couronne d'appui 95 de l'organe intermédiaire 83.

Comme pour le premier embrayage 89A, l'élément élastique 157B maintient, au repos, la seconde surface du piston 155B au contact du fond du logement 101 et par suite, les premiers et seconds disques 151B et 153B à l'écart. Le second embrayage 89B est donc naturellement en position ouverte, c'est à dire qu'il est naturellement en position débrayée.

Par ailleurs, le second embrayage 89B est de type « humide ». Le second piston 155B est déplaçable axialement vers l'amont sous l'effet de la pression du fluide qui débouche dans le second logement 101, pour que le second embrayage 89B soit en position fermée, c'est à dire embrayée.

Les premier et second embrayages 89A et 89B sont montés coaxialement et concentriquement, de sorte que l'encombrement de l'ensemble de transmission suivant l'axe X-X' est minimal. Cet encombrement est inférieur ou sensiblement égal à celui d'un élément d'embrayage classique de véhicule à propulsion mono-source.

De plus, l'organe de couplage 85 et l'organe intermédiaire 83 sont disposés dans un même plan perpendiculaire à l'axe X-X' pour minimiser l'encombrement de l'élément de transmission suivant l'axe X-X'.

Par ailleurs, le premier embrayage 89A est disposé radialement à l'extérieur du second embrayage 89B.

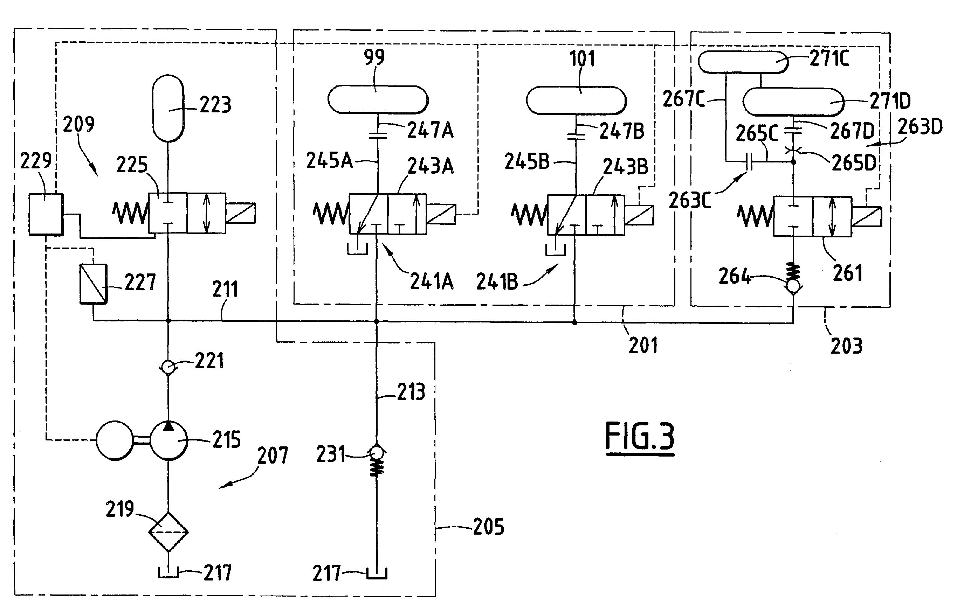

Comme illustré sur la Figure 3, les premier et second embrayages sont commandés sélectivement, lubrifiés et refroidis par un fluide sous pression circulant à travers un premier circuit hydraulique 201 de commande et un second circuit hydraulique 203 de lubrification/refroidissement depuis une source 205 de fluide sous pression commune à ces deux circuits 201 et 203.

Cette source 205 de fluide sous pression comprend un générateur de pression 207, un accumulateur de pression 209, une conduite 211 d'émission de fluide sous pression et un circuit de décharge 213.

Le générateur de pression 207 est constitué par une pompe 215 dont l'entrée est reliée hydrauliquement à un réservoir de fluide 217. Un élément de filtration 219 (désigné par « crépine ») est interposé entre le réservoir 217 et la pompe 215.

La sortie de la pompe 215 est reliée d'une part, à l'accumulateur de pression 209 et d'autre part, à la conduite d'émission 211. Cette sortie est munie d'un clapet anti-retour 221 qui évite que le fluide sous pression soit réintroduit dans la pompe 215. Dans l'exemple représenté sur la Figure 3, la pression du fluide en sortie de la pompe 215 est sensiblement de 40 bars, pour un débit de 1,4 litre par minute. Dans cet exemple, les embrayages sont dimensionnés pour transmettre un couple maximal de 270 N.m.

L'accumulateur de pression 209 comprend un réservoir de fluide 223 et une électrovanne de liaison 225 avec le générateur de pression 207 et la conduite d'émission 211. Cette électrovanne 225 fonctionne selon trois modes.

Dans un mode récepteur, le fluide sous pression circule depuis le générateur de pression 207 vers le réservoir 223 pour recharger le réservoir 223 en fluide sous pression. Dans un mode émetteur, le fluide sous pression circule entre le réservoir 223 et la conduite d'émission 211 pour distribuer du fluide sous pression aux circuits hydrauliques 201 et 203. Enfin, dans un mode neutre, le réservoir 223 est isolé de la conduite d'émission 211.

La conduite d'émission 211 est munie d'un capteur de pression 227. Ce capteur 227 est relié électriquement à une unité de commande 229 de l'électrovanne 225 de l'accumulateur de pression 209. Lorsque la pression mesurée par le capteur 227 diminue en dessous d'une valeur prédéterminée, l'unité de commande 229 active l'électrovanne 225 pour alimenter la conduite d'émission 211 en fluide sous pression à partir de l'accumulateur 209.

Par ailleurs, l'unité de commande 229 est reliée électriquement au moteur de la pompe 215 pour actionner cette pompe 215 en fonction de la pression mesurée par le capteur 227. Ainsi, lorsque la pression dans la conduite 211 descend en dessous d'une valeur seuil, la pompe 215 est actionnée et l'électrovanne 225 est ouverte pour recharger l'accumulateur de pression 209 en fluide sous pression.

Par ailleurs, la conduite d'émission 211 est reliée hydrauliquement au circuit de décharge 213. Ce circuit de décharge 213 comprend une soupape de sécurité 231 dont l'entrée est reliée à la conduite d'émission 211 et la sortie est reliée au réservoir 217. Au delà d'une valeur de tare prédéterminée (43 bars dans l'exemple illustré sur les Figures), cette soupape 231 est ouverte et le fluide sous pression circule depuis la conduite d'émission 211 jusqu'au réservoir 217 pour diminuer la pression dans cette conduite 211 et dans les premier et second circuits hydrauliques 201 et 203.

Le premier circuit hydraulique 201 de commande est relié hydrauliquement à la conduite d'émission 211. Il comprend des premier et second circuits d'alimentation 241A et 241 B en fluide sous pression respectivement du premier et second logement 99 et 101 de l'organe intermédiaire 83.

Le premier circuit d'alimentation 241A comprend une électrovanne de commande 243A reliée hydrauliquement à la conduite d'émission 211, un premier canal 245A ménagé suivant une direction radiale dans le distributeur hydraulique 87 et un deuxième canal 247A ménagé suivant une direction radiale dans l'organe intermédiaire 83.

Le premier canal 245A comporte un orifice d'entrée relié à la sortie de l'électrovanne de commande 243A et un orifice de sortie qui s'ouvre dans l'espace annulaire entre le distributeur hydraulique 87 et l'organe intermédiaire 83 (Figure 2).

Le second canal 247A comprend un orifice d'entrée sur la face radiale interne de la couronne d'appui 95 en regard de l'orifice de sortie du premier canal 245A, et un orifice de sortie qui s'ouvre dans le premier logement de piston 99.

L'électrovanne 243A est pilotée par l'unité de commande 229 pour commander la pression dans le logement de piston 99 sur un continuum de valeurs dans une gamme prédéterminée (par exemple de 0 à 11 bars).

II est ainsi possible de piloter le premier embrayage 89A pour obtenir un serrage progressif des disques 151A et 153A.

En se référant à la Figure 3, le second circuit d'alimentation 241 B comprend une électrovanne de commande 243B reliée hydrauliquement à la conduite d'émission 211, un troisième canal 245B ménagé suivant une direction radiale dans le distributeur hydraulique 87 et un quatrième canal 247B ménagé suivant une direction radiale dans l'organe intermédiaire 83.

Le troisième canal 245B comporte un orifice d'entrée relié à la sortie de l'électrovanne de commande 243B et un orifice de sortie qui s'ouvre dans l'espace annulaire entre le distributeur hydraulique 87 et l'organe intermédiaire 83 (Figure 2). Le troisième canal 245B est décalé radialement par rapport au premier canal 245A.

Le quatrième canal 247B comprend un orifice d'entrée sur la face radiale interne de la couronne d'appui 95 en regard de l'orifice de sortie du troisième canal et un orifice de sortie qui débouche dans le second logement de piston 101.

L'électrovanne 243B est pilotée par l'unité de commande 229 pour commander la pression dans le logement de piston 99 sur un continuum de valeurs dans une gamme prédéterminée (par exemple de 0 à 11 bars).

Il est ainsi possible de piloter le second embrayage 89B pour obtenir un serrage progressif des disques 151B et 153B.

En se référant à la Figure 3, le circuit de lubrification/refroidissement 203 comprend une électrovanne de commande 261 reliée hydrauliquement à la conduite d'émission 211. Cette électrovanne 261 est du type « tout ou rien », c'est-à-dire qu'elle possède deux modes de fonctionnement, ouvert
ou fermé. Ce circuit 203 comprend par ailleurs une première conduite 263C et une seconde conduite 263D.

Une soupape de sécurité 264 est interposée entre la conduite d'émission 211 et l'électrovanne 261. Cette soupape 264 permet d'éviter, au moment de l'ouverture de l'électrovanne 261, la chute de pression dans la conduite d'émission 211 et donc l'ouverture inopinée de l'un ou l'autre ou des deux embrayages 89A, 89B initialement fermés par la mise en pression des logements 99, 101 à partir de la conduite d'émission 211.

La première conduite 263C comprend un cinquième canal radial 265C. Ce cinquième canal 265C est ménagé dans le distributeur 87. II relie hydrauliquement la sortie de l'électrovanne 261 à un orifice de sortie radial qui s'ouvre dans l'espace annulaire entre le distributeur hydraulique 87 et l'arbre de boîte 13 (Figure 1).

La première conduite comporte par ailleurs un sixième canal 267C interne d'axe X-X'. Ce sixième canal 267C est ménagé dans l'arbre de boite 13. Il comprend un orifice d'alimentation radial sur sa face radiale extérieure, en regard de l'orifice de sortie radial du cinquième canal 265C et un orifice 269C axial sur la face axiale amont de cet arbre 13 (Figure 2).

Par ailleurs, en référence à la Figure 3, la seconde conduite 263D comprend un septième canal 265D axial. Ce canal 265D est ménagé dans le distributeur hydraulique 87 suivant une direction parallèle à l'axe X-X'. Il relie hydrauliquement le cinquième canal 265C à un orifice de sortie radial dans l'espace annulaire entre le distributeur hydraulique 87 et l'organe intermédiaire 83 (Figure 2).

Cette seconde conduite 263D comporte par ailleurs un huitième canal 267D radial interne. Ce canal 267D est ménagé dans l'organe intermédiaire 83. II comprend un orifice d'alimentation radial sur la face radiale interne de la couronne d'appui 95 en regard de l'orifice de sortie radial du septième canal axial 265D du distributeur 87. Il comprend par ailleurs un orifice de sortie sur la face radiale externe de la couronne d'appui 95. Cet orifice de sortie 269D est décalé axialement vers l'amont par rapport au second logement de piston 101.

Lorsqu'un cycle de refroidissement et de lubrification des embrayages 89A, 89B doit être effectué, l'unité de commande 229 pilote la pompe 215 et ouvre l'électrovanne 261.

La lubrification et le refroidissement du premier embrayage 89A sont assurés par la circulation du fluide depuis la conduite d'émission 211, à travers successivement la soupape 264 si la pression dans ladite conduite d'émission 211 est supérieure à une valeur de tare prédéterminée de la soupape 264 (38 bars dans l'exemple illustré sur les Figures), l'électrovanne 261 mise en position ouverte, le cinquième canal 265C, le sixième canal 267C, l'orifice axial 269C de l'arbre de boîte 13, puis le roulement 43, jusqu'au premier espace 271C formé entre l'organe d'entrée 15, et l'organe de sortie 19, l'organe intermédiaire 83 et le premier piston 155A et enfin à travers les disques 151A et 153A du premier embrayage 89A.

La lubrification et le refroidissement du second embrayage 89B sont assurés par la circulation du fluide depuis la conduite d'émission 211, à travers successivement la soupape 264 si la pression dans la conduite 211 est supérieure à une valeur de tare prédéterminée de la soupape 264 (38 bars dans l'exemple illustré sur les Figures), l'électrovanne 261 mise en position ouverte, le septième canal 265D, le huitième canal 267D, l'orifice de sortie 269D jusqu' au second espace 271 D délimité par la couronne d'appui 95 de l'organe intermédiaire 83, le second piston 155B et l'organe de sortie 19, et enfin à travers les disques 151 B et 153B du second embrayage 89B.

Par ailleurs, l'espace 271D est en communication hydraulique avec l'espace 271C par le second embrayage 89B.

D'autre part, les deux demi-coquilles du carter 65 et 67, le capot d'étanchéité 45, l'organe d'entrée 15, l'organe de couplage 85 et l'arbre de boîte 13 définissent un logement 69 étanche pour le fluide de refroidissement et de lubrification.

La lubrification et le refroidissement des moyens de transmission constitués par la roue dentée 123 de l'organe de couplage 85, la chaîne morse 135 et la roue dentée 121 de l'organe intermédiaire 83, sont assurés par aspersion du fluide de lubrification et de refroidissement qui s'écoule hors du premier espace 271C à travers les premiers et seconds disques 151A et 153A du premier embrayage 89A.

Pour exemple, on décrira maintenant le fonctionnement de l'élément de transmission selon l'invention lors du décollage d'un véhicule automobile selon l'invention.

Dans un premier temps, le véhicule peut être décollé à l'aide de la machine électrique 14.

L'électrovanne 243B est actionnée pour alimenter en fluide sous pression le second circuit d'alimentation 241B. En se référant à la Figure 2, la pression du fluide dans le troisième canal 245B du distributeur hydraulique 87 puis dans le quatrième canal 247B de l'organe intermédiaire 83 et par suite dans le second logement 101 du second piston 155B augmente.

Sous l'effet de cette augmentation de pression, une force s'applique sur la seconde surface du second piston 155B. Cette force est supérieure à la force de rappel de l'élément élastique 157B et le second piston 155B se déplace axialement vers l'amont. Les premiers et les seconds disques 151 B et 153B du second embrayage 89B sont solidarisés progressivement suivant la pression dans le logement 101 commandée par l'unité de commande 229. Ainsi le second embrayage 89B est progressivement fermé ou embrayé.

Une alimentation électrique est fournie au stator 27 qui entraîne en rotation le rotor 26 et par suite, l'organe de couplage 85. Ce mouvement de rotation est transmis à l'organe intermédiaire 83 par la chaîne morse 135.

Le second embrayage 89B étant fermé, le mouvement de rotation de l'organe intermédiaire 83 est transmis à l'organe de sortie 19. Cet organe de sortie 19 entraîne en rotation autour de l'axe X-X' l'arbre de boîte 13 et par suite, si un rapport de la boîte de vitesses est engagé, les roues du véhicule.

Lorsque le véhicule atteint une vitesse prédéterminée, le moteur thermique peut être démarré à l'aide de la machine électrique.

L'électrovanne 243A est alors actionnée pour alimenter en fluide sous pression le premier circuit d'alimentation 241A. En se référant à la Figure 2, la pression du fluide dans le premier canal 245A du distributeur hydraulique 87, puis dans le deuxième canal 247A de l'organe intermédiaire 83 et par suite dans le premier logement 99 du premier piston 155A augmente.

Sous l'effet de cette augmentation de pression, une force s'applique sur la seconde surface du premier piston 155A. Cette force est supérieure à la force de rappel de l'élément élastique 157A. Le premier piston 155A se déplace alors axialement vers l'amont.

Par suite, les premiers et seconds disques 151A et 153A sont serrés progressivement suivant la pression dans le logement 99 commandée par l'unité de commande externe 229 entre la première surface du premier piston 155A et la butée 159A. Ainsi, le premier embrayage 89A est progressivement fermé ou embrayé.

La machine électrique 14 étant toujours alimentée, le mouvement de rotation de l'organe intermédiaire 83 est transmis à l'organe d'entrée 15 par le premier embrayage 89A.

L'organe d'entrée 15 entraîne en rotation le dispositif amortisseur 23, le volant d'inertie 22 et par suite le vilebrequin 11 du moteur thermique.

Lorsque ce moteur atteint un régime suffisant, l'injection et la combustion de carburant dans les pistons sont démarrées.

A cet instant, l'alimentation électrique de la machine électrique 14 peut être coupée. Le mouvement de rotation de l'organe intermédiaire 83 est transmis à l'organe de couplage 85 par la chaîne morse 135. Cette rotation de l'organe de couplage entraîne en rotation le rotor 26 pour une production possible d'énergie électrique qui est recueillie aux bornes du stator 27.

Durant toutes ces opérations, la lubrification et le refroidissement des premier et second embrayages 89A et 89B ainsi que de l'organe intermédiaire 83, de la chaîne morse 135, et de l'organe de couplage 85 est assurée par la circulation d'un fluide de lubrification et de refroidissement à travers l'électrovanne 261, et les première et deuxième conduites 263C et 263D comme décrit ci-dessus.

Par ailleurs, l'organe d'entrée 15, les premier et second embrayages 89A et 89B, l'organe intermédiaire 83, le distributeur hydraulique 87 et l'organe de sortie 19 font partie d'un module agencé d'un seul tenant dans le logement 69 du carter d'embrayage 21. Ce carter 21 peut être facilement adapté sur une chaîne de transmission de véhicule à propulsion mono-source.

En variante, les embrayages 89A et 89B peuvent être tous les deux naturellement fermés, c'est-à-dire naturellement embrayés ou l'un naturellement fermé et l'autre naturellement ouvert.

Grâce à l'invention qui vient d'être décrite, il est possible de disposer d'un élément de transmission particulièrement compact. Cet élément permet d'installer une chaîne de traction du type hybride parallèle sur un véhicule à configuration de transmission classique et inversement, sans modification majeure des autres éléments de la chaîne de traction, notamment du moteur thermique et de la boîte de vitesse qui restent au même emplacement.

Grâce à la source de pression commune des circuits de commande hydraulique et de lubrification/refroidissement de l'élément de transmission, il est possible de minimiser l'encombrement de cet élément.

Dans l'élément de transmission selon l'invention, la commande de chacun des embrayages en position fermée, est assurée par la pression du fluide qui agit sur l'organe d'actionnement correspondant et le rappel de chacun desdits embrayages est effectué par l'organe de rappel qui agit également sur cet organe d'actionnement permettant ainsi d'éviter l'utilisation de pièces intermédiaires de commande.

## Revendications

1. Elément de transmission pour une chaîne de traction de type hybride parallèle, notamment pour véhicules automobiles, ledit élément comprenant un organe d'entrée (15) rotatif destiné à être relié à un moteur thermique (11), un organe de sortie (19) de mouvement destiné à être relié à un arbre d'entrée (13) de boîte de vitesses, une machine électrique (14) comprenant un stator (27) et un rotor (26), un premier embrayage (89A) de liaison entre l'organe d'entrée (15) et un organe intermédiaire (83) rotatif autour d'un premier axe (X-X'), l'organe intermédiaire (83) étant relié en rotation au rotor (26), un second embrayage (89B) de liaison entre l'organe intermédiaire (83) et l'organe de sortie (19), lesdits embrayages (89A, 89B) étant de type humide, **caractérisé en ce qu'**il comprend un carter (21) comportant une première demi-coquille (65) supportant à rotation l'organe d'entrée (15) et une seconde demi-coquille (67) supportant à rotation l'arbre de boîte (13), les première et seconde demi-coquilles (65, 67) définissant un logement (69) dans lequel sont montés coaxiale ment et concentriquement les premier et second embrayages de liaison (89A, 89B), **en ce que** l'axe (Y-Y') de rotation du rotor (26) est distinct du premier axe (X-X'), **en ce que** des moyens de transmission (121, 123, 135) relient en rotation le rotor (26) et l'organe intermédiaire (83) et **en ce qu'**il comprend en outre des moyens (201, 203, 205) de commande hydraulique sélective et de lubrification/refroidissement desdits premier et second embrayages (89A, 89B).

2. Elément de transmission selon la revendication 1 **caractérisé en ce que** les moyens (201, 203, 205) de commande hydraulique sélective et de lubrification/refroidissement comprennent un premier circuit hydraulique (201) de commande sélective, et un second circuit hydraulique (203) de lubrification/refroidissement, lesdits premier et second circuits hydrauliques étant reliés hydrauliquement à une source commune (205) de fluide sous pression.

3. Elément de transmission selon la revendication 2 **caractérisé en ce que** lesdits premier et second circuits hydrauliques (201, 203) sont ménagés, au moins en partie dans l'organe intermédiaire (83) et au moins en partie dans un distributeur hydraulique (87) fixé sur le carter (21) et supportant à rotation l'organe intermédiaire (83).

4. Elément de transmission suivant l'une des revendications 2 à 3, **caractérisé en ce que** ledit premier circuit (201) comprend pour chaque embrayage (89A, 89B), un logement (99, 101) ménagé dans l'organe intermédiaire (83) et obturé par un organe d'actionnement de l'embrayage (155A , 155B) déplaçable sous l'effet de la pression dans ledit logement (99, 101), ledit logement (99, 101) étant relié hydrauliquement à la source de pression par un circuit d'alimentation (241A, 241 B), une électrovanne (243A, 243B) étant disposée sur ledit circuit d'alimentation (241A, 241 B).

5. Elément de transmission selon la revendication 4, **caractérisé en ce que** les premier et second embrayages (89A, 89B) comprennent chacun un organe de rappel (157A, 157B) en position ouverte de ces embrayages (89A, 89B), l'organe de rappel (157A, 157B) s'appuyant sur une face de l'organe d'actionnement (155A , 155B) de l'embrayage (89A, 89B).

6. Elément de transmission suivant l'une des revendications 4 ou 5, **caractérisé en ce que** ledit circuit d'alimentation (241A, 241 B) comprend une première portion (245A, 245B) ménagée dans le distributeur hydraulique (87) et une seconde portion (247A, 247B) ménagée dans ledit organe intermédiaire (83) et débouchant dans la chambre de pression (99, 101), lesdites première et seconde portions (245A, 245B ; 247A, 247B) étant en communication hydraulique à travers l'espace annulaire entre le distributeur (87) et l'organe intermédiaire (83).

7. Elément de transmission suivant l'une des revendications 2 à 6, **caractérisé en ce que** le second circuit (203) comprend une première conduite (263C) entre la source de pression (205) et un premier espace (271 C) délimité par l'organe d'entrée (15), l'arbre de boîte (13), l'organe intermédiaire (83) et l'organe de sortie (19), ce premier espace (271 C) étant obturé partiellement par le premier embrayage (89A), une électrovanne (261) étant disposée dans le second circuit (203) en amont de la première conduite (263C).

8. Elément de transmission suivant la revendication 7, **caractérisé en ce que** ladite première conduite (263C) comprend une première portion (265C) ménagée dans le distributeur hydraulique (87), et une seconde portion (267C) ménagée dans l'arbre de boîte (13), la seconde portion (267C) débouchant dans le premier espace (271 C), les première et seconde portions (265C, 267C) étant en communication hydraulique à travers l'espace annulaire entre l'arbre de boîte (13) et le distributeur hydraulique (87).

9. Elément de transmission suivant l'une des revendications 7 à 8, **caractérisé en ce que** le second circuit (203) comprend une seconde conduite (263D) entre la source de pression (205) et un second espace (271 D) délimité par l'organe intermédiaire (83) et l'organe de sortie (19), ce second espace (271 D) étant obturé partiellement par le second embrayage (89B), une électrovanne (261) étant disposée dans le second circuit (203) en amont de la seconde conduite (263D).

10. Elément de transmission suivant la revendication 9, **caractérisé en ce que** la seconde conduite (263D) comprend une première portion (265D) ménagée dans le distributeur hydraulique (87), et une seconde portion (267D) ménagée dans l'organe intermédiaire (83), la seconde portion (267D) débouchant dans le second espace (271 D), les première et seconde portions (265D, 267D) étant en communication hydraulique à travers l'espace annulaire entre l'organe intermédiaire (83) et le distributeur hydraulique (87).

11. Elément de transmission suivant l'une des revendications 9 à 10, **caractérisé en ce que** les premier et second espaces (271C, 271D) communiquent hydrauliquement par le second embrayage (89B).

12. Elément de transmission suivant l'une des revendications 9 à 11, **caractérisé en ce que** le premier espace (271 C) et ledit logement (69) communiquent hydrauliquement par le premier embrayage (89A).

13. Elément de transmission selon l'une des revendications 2 à 12, **caractérisé en ce que** ladite source de fluide sous pression (205) comprend un générateur de pression (207), un accumulateur de pression (209), une conduite d'émission (211) de fluide, reliée d'une part audit générateur de pression (207), et d'autre part audit accumulateur de pression (209), et une électrovanne (225) disposée entre l'accumulateur de pression (209) et la conduite d'émission (211), ladite électrovanne (225) étant adaptée pour sélectivement ouvrir ou fermer la liaison entre l'accumulateur (209) et la conduite d'émission (211).

14. Elément de transmission suivant la revendication 13, **caractérisé en ce que** le générateur (207) comprend une pompe (215), un réservoir (217) de fluide de commande, un clapet anti-retour (221), ladite pompe (215) étant reliée en amont au réservoir (217) et en aval à la conduite d'émission (211) via le clapet anti-retour (221).

15. Elément de transmission suivant l'une des revendications 12 à 14, **caractérisé en ce que** la source de pression (205) comprend un capteur de pression (227) mesurant la pression de fluide régnant dans la conduite d'émission (211), ledit capteur de pression étant relié à une unité de commande (229) de l'électrovanne (225) entre l'accumulateur de pression (209) et la conduite d'émission (211) qui pilote ladite électrovanne (225) en fonction de la pression mesurée par ledit capteur de pression (227).

16. Elément de transmission suivant l'une quelconque des revendications 13 à 15, **caractérisé en ce que** la conduite d'émission (211) comporte une soupape de sécurité (231) adaptée pour mettre en communication ladite conduite d'émission (211) avec un circuit de décharge (213) si la pression dans la conduite d'émission (211) est supérieure à une valeur de seuil prédéterminée.

17. Véhicule automobile comprenant une chaîne de traction de type hybride parallèle, ladite chaîne de traction comprenant un moteur thermique, une boîte de vitesses et un élément de transmission selon l'une quelconque des revendications 1 à 16 reliant le moteur thermique à la boîte de vitesse.

## Claims

1. Transmission element for a traction chain of the parallel hybrid type, in particular for motor vehicles, said element comprising a rotary input member (15) intended to be connected to a heat engine (11), a movement output member (19) intended to be connected to a gear-box input shaft (13), an electric machine (14) comprising a stator (27) and a rotor (26), a first connection clutch (89A) between the input member (15) and an intermediate member (83) that can rotate about a first axis (X-X'), the intermediate member (83) being connected in rotation to the rotor (26), a second connection clutch (89B) between the intermediate member (83) and the output member (19), said clutches (89A, 89B) being of the wet type, **characterised in that** it comprises a casing (21) comprising a first half-shell (65) supporting the input member (15) in rotation and a second half-shell (67) supporting the gear box shaft (13) in rotation, the first and second half-shells (65, 67) defining a housing (69) in which the first and second connecting clutches (89A, 89B) are mounted coaxially and concentrically, **in that** the axis (Y-Y') of rotation of the rotor (26) is distinct from the first axis (X-X'), **in that** transmission means (121, 123, 135) connect the rotor (26) and the intermediate member (83) in rotation and **in that** it further comprises means (201, 203, 205) for selective hydraulic control and for lubricating/cooling said first and second clutches (89A, 89B).

2. Transmission element according to Claim 1 **characterised in that** the selective hydraulic control and lubrication/cooling means (201, 203, 205) comprise a first selectively controlled hydraulic circuit (201), and a second hydraulic lubrication/cooling circuit (203), said first and second hydraulic circuits being connected hydraulically to a common source (205) of pressurised fluid.

3. Transmission element according to Claim 2 **characterised in that** said first and second hydraulic circuits (201, 203) are produced at least partly in the intermediate member (83) and at least partly in a hydraulic distributor (87) fixed to the casing (21) and supporting the intermediate member (83) in rotation.

4. Transmission element according to one of Claims 2 to 3, **characterised in that** said first circuit (201) comprises, for each clutch (89A, 89B), a housing (99, 101) provided in the intermediate member (83) and blocked by a clutch actuation member (155A, 155B) displaceable under the effect of the pressure in said housing (99, 101), said housing (99, 101) being connected hydraulically to the pressure source by a supply circuit (241A, 241 B), a solenoid valve (243A, 243B) being positioned on said supply circuit (241A, 241 B).

5. Transmission element according to Claim 4, **characterised in that** the first and second clutches (89A, 89B) each comprise a return member (157A, 157B) when these clutches (89A, 89B) are in the open position, the return member (157A, 157B) pressing on one face of the actuation member (155A, 155B) of the clutch (89A, 89B).

6. Transmission element according to one of Claims 4 or 5, **characterised in that** said supply circuit (241A, 241 B) comprises a first portion (245A, 245B) provided in the hydraulic distributor (87) and a second portion (247A, 247B) provided in said intermediate member (83) and emerging into the pressure chamber (99, 101), said first and second portions (245A, 245B; 247A, 247B) being in hydraulic communication through annular space between the distributor (87) and the intermediate member (83).

7. Transmission element according to one of Claims 2 to 6, **characterised in that** the second circuit (203) comprises a first conduit (263C) between the pressure source (205) and a first space (271 C) delimited by the input member (15), the gear box shaft (13), the intermediate member (83) and the output member (19), this first space (271C) being partly blocked by the first clutch (89A), a solenoid valve (261) being positioned in the second circuit (203) upstream of the first conduit (263C).

8. Transmission element according to Claim 7, **characterised in that** said first conduit (263C) comprises a first portion (265C), provided in the hydraulic distributor (87), and a second portion (267C), provided in the gear box shaft (13), the second portion (267C) emerging in the first space (271 C), the first and second portions (265C, 267C) being in hydraulic communication through the annular space between the gear box shaft (13) and the hydraulic distributor (87).

9. Transmission element according to one of Claims 7 to 8, **characterised in that** the second circuit (203) comprises a second conduit (263D) between the pressure source (205) and a second space (271 D) delimited by the intermediate member (83) and the output member (19), this second space (271 D) being partly blocked by the second clutch (89B), a solenoid valve (261) being positioned in the second circuit (203) upstream of the second conduit (263D).

10. Transmission element according to Claim 9, **characterised in that** the second conduit (263D) comprises a first portion (265D), provided in the hydraulic distributor (87), and a second portion (267D), provided in the intermediate member (83), the second portion (267D) emerging in the second space (271 D), the first and second portions (265D, 267D) being in hydraulic communication through the annular space between the intermediate member (83) and the hydraulic distributor (87).

11. Transmission element according to one of Claims 9 to 10, **characterised in that** the first and second spaces (271C, 271 D) communicate hydraulically by the second clutch (89B).

12. Transmission element according to one of Claims 9 to 11, **characterised in that** the first space (271 C) and said housing (69) communicate hydraulically by the first clutch (89A).

13. Transmission element according to one of Claims 2 to 12, **characterised in that** said source of pressurised fluid (205) comprises a pressure generator (207), a pressure accumulator (209), a fluid emission conduit (211), connected on the one hand to said pressure generator (207), and on the other hand to said pressure accumulator (209), and a solenoid valve (225) positioned between the pressure accumulator (209) and the emission conduit (211), said solenoid valve (225) being adapted to selectively open or close the link between the accumulator (209) and the emission conduit (211).

14. Transmission element according to Claim 13, **characterised in that** the generator (207) comprises a pump (215), a control fluid reservoir (217), a non-return valve (221), said pump (215) being connected upstream to the reservoir (217) and downstream to the emission conduit (211) via the non-return valve (221).

15. Transmission element according to one of Claims 12 to 14, **characterised in that** the pressure source (205) comprises a pressure sensor (227) measuring the fluid pressure prevailing in the emission conduit (211), said pressure sensor being connected to a control unit (229) for the solenoid valve (225) between the pressure accumulator (209) and the emission conduit (211), which controls said solenoid valve (225) as a function of the pressure measured by said pressure sensor (227).

16. Transmission element according to any one of Claims 13 to 15, **characterised in that** the emission conduit (211) comprises a safety valve (231) adapted to put said emission conduit (211) into communication with a discharge circuit (213) if the pressure in the emission conduit (211) is above a predetermined threshold value.

17. Motor vehicle comprising a traction chain of the parallel hybrid type, said traction chain comprising a heat engine, a gear box and a transmission element according to any one of Claims 1 to 16, connecting the heat engine to the gear box.

## Patentansprüche

1. Übertragungselement für einen parallelen Hybridantriebsstrang, insbesondere für Kraftfahrzeuge, mit einem drehbaren Eingangsorgan (15), das mit einem Verbrennungsmotor (11) verbunden wird, mit einem beweglichen Ausgangsorgan (19), das mit einer Eingangswelle (13) des Schaltgetriebes verbunden wird, mit einem Elektromotor (14) mit einem Stator (27) und einem Rotor (26), mit einer ersten Kupplung (89A) zur Verbindung zwischen dem Eingangsorgan (15) und einem Zwischenorgan (83), das um eine erste Achse (X-X') drehbar ist, wobei das Zwischenorgan (83) mit dem Rotor (26) drehverbunden ist, mit einer zweiten Kupplung (89B) zur Verbindung zwischen dem Zwischenorgan (83) und dem Ausgangsorgan (19), wobei die Kupplungen (89A, 89B) nasslaufende Kupplungen sind, **dadurch gekennzeichnet, dass** es ein Gehäuse (21) mit einer ersten Halbschale (65), die das Eingangsorgan (15) rotierend trägt, und mit einer zweiten Halbschale (67) aufweist, die die Getriebewelle (13) rotierend trägt, wobei die erste und die zweite Halbschale (65, 67) eine Aufnahme (69) festlegen, in der die erste und die zweite Kupplung (89A, 89B) koaxial und konzentrisch angeordnet sind, und **dadurch**, dass die Drehachse (Y-Y') des Rotors (26) von der ersten Achse (X-X') verschieden ist, dass die Übertragungsmittel (121, 123, 135) den Rotor (26) und das Zwischenorgan (83) in Drehung verbinden und dass es darüber hinaus Mittel (201, 203, 205) zur selektiven hydraulischen Steuerung und zur Schmierung/Kühlung der ersten und zweiten Kupplung (89A, 89B) aufweist.

2. Übertragungselement nach Anspruch 1, **dadurch gekennzeichnet, dass** die Mittel (201, 203, 205) zur selektiven hydraulischen Steuerung und zur Schmierung/Kühlung einen ersten Hydraulikkreis (201) zur selektiven Steuerung und einen zweiten Hydraulikkreis (203) zur Schmierung/Kühlung aufweisen, die mit einer gemeinsamen Quelle (205) für Druckfluid hydraulisch verbunden sind.

3. Übertragungselement nach Anspruch 2, **dadurch gekennzeichnet, dass** der erste und der zweite Hydraulikkreis (201, 203) zumindest teilweise im Zwischenorgan (83) und zumindest teilweise in einem hydraulischen Verteiler (87) angeordnet sind, der am Gehäuse (21) befestigt ist und das Zwischenorgan (83) drehend trägt.

4. Übertragungselement nach einem der Ansprüche 2 bis 3, **dadurch gekennzeichnet, dass** der erste Kreis (201) für jede Kupplung (89A, 89B) eine Aufnahme (99, 101) aufweist, die im Zwischenorgan (83) angeordnet ist und von einem Organ zur Betätigung der Kupplung (155A, 155B) verschlossen wird, das unter der Wirkung des Drucks in der Aufnahme (99, 101) verschiebbar ist, wobei die Aufnahme (99, 101) über einen Versorgungskreis (241A, 241B) hydraulisch mit der Druckquelle verbunden ist und wobei ein Elektroventil (243A, 243B) am Versorgungskreis (241A, 241B) angeordnet ist.

5. Übertragungselement nach Anspruch 4, **dadurch gekennzeichnet, dass** die erste und die zweite Kupplung (89A, 89B) jeweils ein Organ (157A, 157B) zum Rückführen der Kupplungen (89A, 89B) in die offene Position aufweisen, wobei das Rückstellorgan (157A, 157B) an einer Seite des Organs (155A, 155B) zur Betätigung der Kupplung (89A, 89B) anliegt.

6. Übertragungselement nach einem der Ansprüche 4 oder 5, **dadurch gekennzeichnet, dass** der Versorgungskreis (241A, 241B) einen ersten Abschnitt (245A, 245B) im hydraulischen Verteiler (87) und einen zweiten Abschnitt (247A, 247B) im Zwischenorgan (83) aufweist, der in die Druckkammer (99, 101) mündet, wobei der erste und zweite Abschnitt (245A, 245B; 247A, 247B) über den ringförmigen Raum zwischen dem Verteiler (87) und dem Zwischenorgan (83) hydraulisch in Verbindung stehen.

7. Übertragungselement nach einem der Ansprüche 2 bis 6, **dadurch gekennzeichnet, dass** der zweite Kreis (203) eine erste Leitung (263C) zwischen der Druckquelle (205) und einem ersten Raum (271 C) aufweist, der vom Eingangsorgan (15), der Getriebewelle (13), dem Zwischenorgan (83) und dem Ausgangsorgan (19) festgelegt wird, wobei der erste Raum (271C) teilweise von der ersten Kupplung (89A) verschlossen wird und ein Elektroventil (261) im zweiten Kreis (203) vor der ersten Leitung (263C) angeordnet ist.

8. Übertragungselement nach Anspruch 7, **dadurch gekennzeichnet, dass** die erste Leitung (263C) einen ersten Abschnitt (265C) im hydraulischen Verteiler (87) und einen zweiten Abschnitt (267C) in der Getriebewelle (13) aufweist, wobei der zweite Abschnitt (267C) in den ersten Raum (27 1 C) mündet und der erste und zweite Abschnitt (265C, 267C) über den ringförmigen Raum zwischen der Getriebewelle (13) und dem hydraulischen Verteiler (87) hydraulisch verbunden sind.

9. Übertragungselement nach einem der Ansprüche 7 bis 8, **dadurch gekennzeichnet, dass** der zweite Kreis (203) eine zweite Leitung (263D) zwischen der Druckquelle (205) und einem zweiten Raum (271D) aufweist, wobei der zweite Raum vom Zwischenorgan (83) und dem Ausgangsorgan (19) festgelegt und teilweise von der zweiten Kupplung (89B) verschlossen wird und wobei ein Elektroventil (261) im zweiten Kreis (203) vor der zweiten Leitung (263D) angeordnet ist.

10. Übertragungselement nach Anspruch 9, **dadurch gekennzeichnet, dass** die zweite Leitung (263D) einen ersten Abschnitt (265D) im hydraulischen Verteiler (87) und einen zweiten Abschnitt (267D) im Zwischenorgan aufweist, wobei der zweite Abschnitt (267D) in den zweiten Raum (271D) mündet und wobei der erste und zweite Abschnitt (265D, 267D) über den ringförmigen Raum zwischen dem Zwischenorgan (83) und dem hydraulischen Verteiler (87) hydraulisch verbunden sind.

11. Übertragungselement nach einem der Ansprüche 9 bis 10, **dadurch gekennzeichnet, dass** der erste und zweite Raum (271C, 271D) über die zweite Kupplung (89B) hydraulisch verbunden sind.

12. Übertragungselement nach einem der Ansprüche 9 bis 11, **dadurch gekennzeichnet, dass** der erste Raum (271C) und die Aufnahme (69) über die erste Kupplung (89A) hydraulisch verbunden sind.

13. Übertragungselement nach einem der Ansprüche 2 bis 12, **dadurch gekennzeichnet, dass** die Quelle (205) für unter Druck stehendes Fluid einen Druckgenerator (207), einen Druckspeicher (209), eine Fluidauslassleitung (211), die zum einen mit dem Druckgenerator (207) und zum anderen mit dem Druckspeicher (209) verbunden ist, und ein Elektroventil (225) zwischen dem Druckspeicher (209) und der Auslassleitung (211) aufweist, wobei das Elektroventil (225) die Verbindung zwischen dem Speicher (209) und der Auslassleitung (211) selektiv öffnen oder schließen kann.

14. Übertragungselement nach Anspruch 13, **dadurch gekennzeichnet, dass** der Generator (207) eine Pumpe (215), einen Behälter (217) für Steuerfluid und ein Rückschlagventil (221) aufweist, wobei die Pumpe (215) stromaufwärts mit dem Behälter (217) und stromabwärts über das Rückschlagventil (221) mit der Auslassleitung (211) verbunden ist.

15. Übertragungselement nach einem der Ansprüche 12 bis 14, **dadurch gekennzeichnet, dass** die Druckquelle (205) einen Drucksensor (227) aufweist, der den Druck des Fluids in der Auslassleitung (211) misst, wobei der Drucksensor mit einer Einheit (229) zur Steuerung des Elektroventils (225) zwischen dem Druckspeicher (209) und der Auslassleitung (211) verbunden ist, die das Elektroventil (225) abhängig von dem vom Drucksensor (227) gemessenen Druck steuert.

16. Übertragungselement nach einem der Ansprüche 13 bis 15, **dadurch gekennzeichnet, dass** die Auslassleitung (211) ein Sicherheitsventil (231) aufweist, das die Auslassleitung (211) mit einem Überlaufkreis (213) verbinden kann, wenn der Druck in der Auslassleitung (211) einen vorher festgelegten Grenzwert übersteigt.

17. Kraftfahrzeug mit einem parallelen Hybridantriebsstrang, wobei der Antriebsstrang einen Verbrennungsmotor, ein Getriebe und ein Übertragungselement nach einem der Ansprüche 1 bis 16, das den Verbrennungsmotor mit dem Getriebe verbindet, aufweist.
